# EUROPÄISCHE PATENTSCHRIFT

(11) **EP 0 659 449 B1**
(45) Veröffentlichungstag und Bekanntmachung des Hinweises auf die Patenterteilung: **24.03.1999**
(21) Anmeldenummer: 94120218.6
(22) Anmeldetag: 20.12.1994
(51) Int. Cl.: A62D 1/00, B01J 19/06, C09K 3/00

(54) **Verdicktes Wasser**
Thickened water
De l'eau épaissie

(30) Priorität: 21.12.1993 DE 4343728
(43) Veröffentlichungstag der Anmeldung: 28.06.1995
(73) Patentinhaber: LÖHNERT, Gernot, D-46499 Hamminkeln (DE)
(72) Erfinder: Löhnert, Gernot, Dr., D-46499 Hamminkeln (DE); Buil, Jürgen, D-47533 Kleve (DE); Löhnert, Katharina, D-46499 Hamminkeln (DE)
(74) Vertreter: Pfenning, Meinig & Partner

(56) Entgegenhaltungen:
- EP-A- 0 199 897
- EP-A- 0 207 045
- WO-A-92/13602
- DE-A- 2 937 333
- US-A- 3 666 707
- US-A- 4 822 524
- CENTRAL PATENTS INDEX, BASIC ABSTRACTS JOURNAL Section Ch, Week D42, Derwent Publications Ltd., London, GB; Class C, AN 81-76976D/42 & JP-A-56 113 707 (KURARAY KK) 7. September 1981

## Beschreibung

Aus der WO 92-13602 ist ein Feuerlösch- und Brandschutzmittel bekannt, das aus verdicktem Wasser besteht, wobei eine verdickte Aufschlämmung von amorpher, synthetischer Kieselsäure in Wasser mit einem Gewichtsgehalt an Kieselsäure von mindestens 1 % hergestellt wird. Nach einer bevorzugten Ausführungsform der Erfindung werden diesem verdickten Wasser noch Additive zugegeben. Als Additive werden dabei u.a. Polyethylenglykole sowie deren Derivate und Polyoxyethylenfettalkoholether, Polyoxyethylenfettsäureester und der Gemische sowie Polyoxyethylenzuckeralkoholfettsäureestern vorgeschlagen. Dieses verdickte Wasser wird dabei als Feuerlösch- und Brandschutzmittel eingesetzt.

Es hat sich jedoch gezeigt, daß diese bekannten Feuerlöschmittel in besonderen Anwendungsfällen, nämlich bei heißen Bränden glutbildender Stoffe, in der Glutzone - wie alle schichtbildenden Feuerlöschmittel Haftungsprobleme auf diesen außergewöhnlich heißen Untergründen aufweisen.

Dies ist offenbar darauf zurückzuführen, daß das Mittel nach der WO 92-13602 beim Erhitzen auf Siedetemperatur die Eigenschaft des "Siedeverzuges" sehr ausgeprägt zeigt. Dieser Siedeverzug tritt auf, obwohl gerade die Verzögerung des Siedens durch die Verdickung von Wasser gemäß WO 92-13602 die Anwendung von Wasser als Löschmittel durch die Möglichkeit des wesentlich längeren Vorhaltens an den brandgefährdeten heißen Flächen sehr begünstigen sollte und tatsächlich auch begünstigt. Bei sehr heißen, stark gluthaltigen Brandzonen wurde festgestellt, daß sich die Eigenschaft des "Siedeverzugs" des genannten Mittels bei der Schichtbildung derart auswirkt, daß die gebildete Schicht oder Teile hiervon mit dem noch darin enthaltenen Wasser durch die plötzliche Verdampfung als Ganzes weggeschleudert werden und damit an den dann stellenweise unbedeckten Stellen ein Wiederaufflammen ermöglicht wird.

Es ist deshalb wünschenswert, wenn bei gleichzeitigem Anhaften des Wassers an den brennbaren Oberflächen in möglichst dicker Schicht insbesondere an den sehr heißen Oberflächen, wie der Glutzone eines Brandes, das Verdampfen des Wassers in verzögerter Form, aber ohne Siedeverzug, erfolgen würde.

Ausgehend von der WO 92-13602 ist es daher die Aufgabe der vorliegenden Erfindung, ein verdicktes Wasser und ein Verfahren zur Herstellung von verdicktem Wasser vorzuschlagen, wobei eine gegenüber der vorstehend erwähnten WO 92-13602 gesteigerte und gegen Schereinflüsse stabilere Verdickungswirkung erzielt werden soll.

Die Aufgabe wird hinsichtlich des Verfahrens durch die Kennzeichen des Anspruches 1 und hinsichtlich des verdickten Wasser durch die Kennzeichen des Anspruches 10 gelöst. Die Unteransprüche zeigen vorteilhafte Weiterbildungen auf.

Die Anmelderin konnte überraschenderweise zeigen, daß durch einen geringen Zusatz an Stärke und/oder verzweigtkettigem Polysaccharids (0,5 bis 5 Gew.-%) eine gegenüber dem Stand der Technik unerwartete Steigerung der Verdickungswirkung erzielt wird.

Die Verwendung von Stärke in verschiedenen Bereichen, wie z.B. in Klebstoffen, in Lebensmittel oder für die Herstellung von Stärkefilmen oder auch in der Textil- und Papierindustrie, ist an und für sich bekannt. Bei diesen typischen Einsatzgebieten wird Stärke meist in hohen Konzentrationen eingesetzt (W. Kempf und G. Kalender, Stärke 24, 220-5,1972). Stärke wird z.B. auch für Borspülflüssigkeiten eingesetzt., bei denen es insbesondere darum geht, den Bohrabrieb - auch in heißem Zustand und unter Schereinwirkung unter Druck - in der Flüssigkeit in der Schwebe zu halten, so daß er nach oben gefördert werden kann.

Auch die Herstellung eines Feuerlöschmittels auf Basis eines u.a. mit 10% Stärke versetzten Wassers wurde beschrieben (Taguchi, C. JP 5836, 566; C.A. 99, 55897, 1983). Ausgehend von der Stärke durch Abbau erzeugbare Polysaccharidgemische oder Melassen als Löschwasserzusatz mit kohlenstoffgerüstbildender Wirkung sind durch die Publikation von W. von Bonin und P. Müller (DE-AS 29 37 333) bekannt.

Letztere haben den Nachteil, daß es damit nicht möglich ist, das Löschwasser durch den beim Feuerlöschen üblichen Spritz- oder Sprühprozeß an Oberflächen so zur Haftung zu bringen, daß es nicht abläuft. Auch tritt die Bildung von Carbonisierungsschäumen erst bei Zusatz gasbildender Treibmittel wie Ammoniumphosphate, Dicyandiamid oder Urotropin ein, wenn das enthaltene Wasser bereits verdampft ist und höhere Temperaturen direkt auf den Löchwasserzusatz einwirken (Hitzezersetzung der Treibmittel). Da das eingebrachte Wasser vorher verdampft ist, ist Wasser bei der Bildung des Carbonisierungsschaumes als Löschmittel nicht mehr vorhanden; der Carbonisierungsschaum allein hat nur noch eine schwache Isolierwirkung. Daher haben sich Löschmittel auf der Basis Stärke oder anderer carbonsierbarer Kohlenhydrate in wässriger Dispersion in der Praxis nicht durchsetzen können.

Die Stärke ist auch als makromolekulares Kohlehydrat - wie auch andere Kohlenhydrate - zur Bildung von Kohlenstoffgerüsten bei höheren Temperaturen befähigt. Darüber hinaus bietet sie die Möglichkeit der Verdickung in wässriger Dispersion. Gele aus unveränderter Stärke lassen sich allerdings wegen der irreversiblen Zerstörung ihrer inneren Struktur bei plastischer Deformation nicht als Dickungsmittel verwenden (A.W. Szenachow, F.I. Ssadow, Kolloidny Shurnal 21, 47-84, 1959). Der praktische Nutzen der Stärke als Verdickungsmittel beruht auf ihrer besonderen Eigenschaft der "Verkleisterung" beim Erhitzen in Wasser auf Temperaturen von ca. 70-90°C, was mit dem Heraustreiben des Amylopektinanteils aus dem Inneren des gequollenen Stärkekorns erklärt wird.

Für eine technisch nutzbare Verdickungswirkung müssen auch bei verkleisterter Stärke bestimmte Mindestkonzentrationen eingesetzt werden, welche je nach Art der Stärke und Anwendungsfall mindestens oberhalb von 3 % oder eines höheren Stärkegehalts im Wasser liegen. Darunter werden nur dünne Flüssigkeiten erhalten, die von Oberflächen rasch ablaufen und für die Bildung anhaftender Schichten mit hohem Wassergehalt nicht geeignet sind. (Zur Rheologie von verkleisterten Stärkelösungen vgl. z.B.: S. Winkler et al., Stärke 23, S. 325-334, 1971; E. Windhab et al., Stärke 40, 20-4- 1988; A. Hersiczky und J.M. Simonyl, Stärke 17, 1-4, 1965, R.A. Schutz und Y. Nedonchelle, Stärke 18, 180-8, 1966).

Wenn auch, wie vorstehend beschrieben, durch Zusatz von Stärke zur Kieselsäure ein zusätzlicher Verdickungseffekt erwartet werden konnte, ist es überraschend, daß die erzielte Wirkung der Kombination von Stärke und/oder Polysaccharid und Kieselsäure mit Additiven weit über einen additiven Effekt hinausgeht, so daß sowohl die Verdickungswirkung der Stärke als auch die der Kieselsäure bedeutend verbessert wird, so daß eine synergistische Wirkungsverstärkung vorliegt.

Daß diese große Steigerung der Verdickungswirkung nicht zu erwarten war, geht einerseits daraus hervor, daß die Kieselsäure als Verdickungsmittel in polaren Flüssigkeiten eine weitaus schwächere Verdickungswirkung aufweist, als in unpolaren. Auch eine niedrig konzentrierte wässrige Stärkelösung ist als polare Flüssigkeit aufzufassen. Von verkleisterten Stärkepasten ist zudem bekannt, daß durch Zusatz von nichtionischen oberflächenaktiven Verbindungen wie Polyoxyethylenstearat eine Reduktion der Konsistenz eintritt oder das Auftreten von Kristallinität in verkleisterter Stärke beobachtet wird (R. Collison, Chemistry und Industry, August 26, 1961, 1364-5; G. Velayudhan nair et al, Stärke 43, 93-8, 1991). Daß der gefundene Effekt deutlich über den mit Kieselsäure und Additiv in der erwähnten Patentanmeldung WO 92/13602 erzielten Effekt hinausgeht, ist überraschend, da nach voranstehend Gesagtem das Gegenteil zu erwarten war.

Es ist somit gegenüber den bekannten Verfahren der Verdickung mit Stärke unter Verwendung von wesentlich geringeren Mengen an Stärke (0,5 % - 5 %) eine höhere, für verschiedene Anwendungen nutzbare Verdickungswirkung in Wasser erzielbar, was neben technischen auch wesentliche wirtschaftlich und durch die nur geringfügigen notwendigen Mengen eines gut abbaufähigen nachwachsenden Rohstoffe auch umweltmäßige Vorteile bietet. Statt der Stärke oder gemeinsam mit dieser können auch andere, verzweigtkettige Polysaccharide, wie z.B. Guar, Johannisbrotkernmehl oder Xanthan, eingesetzt werden.

Der Unterschied zum in WO 92-13602 beschriebenen verdickten Wasser hinsichtlich seiner Wirkung auf glutbildende Brände von hoher Temperatur kann neben den in den Beispielen beschriebenen Löschversuchen auch im Laborversuch erkannt werden, nämlich durch die Bildung eines dichten Blasengerüstes beim Sieden des erfindungsgemäß verdickten Wassers an der Oberfläche ohne Siedeverzug. Das Blasengerüst aus Wasserdampf bedeckt fast vollständig die Oberfläche des siedenden verdickten Wassers, zusätzlich wird die Bildung eines "Siedehäutchens" beobachtet, welche die Oberfläche zusätzlich abdeckt. Dies steht in Einklang mit dem im Versuchsteil beschriebenen Abdeckeffekt des Löschmittels auf eine brennende Benzinfläche.

Das Blasengerüst wird beim Absieden des Wassers immer neu gebildet, führt so zu einer gleichmäßigen Abgabe des Löschmittels Wasserdampf und schließlich nach Aufbrauchen des Wasservorrats zur Bildung eines isolierend wirkenden, mit Kieselsäure verstärkten Kohlenstoffschaums.

Dagegen ist bei nur mit den bekannten Polysaccharid-Verdickungsmitteln hergestellten verdickten Wassergelen die Haftung an Oberflächen, insbesondere an heißen, nur schlecht möglich, und ein Blasengerüst bildet sich nicht oder nur in sehr geringem Ausmaß.

Erfindungsgemäß kann die Mischung der Einsatzstoffe a) bis d) in beliebiger Reihenfolge erfolgen. Wesentlich ist, wie vorstehend beschrieben, die Kombination der Einsatzstoffe a) bis d) in den in Anspruch 1 angegebenen Mengenverhältnissen. Eine vorteilhafte Ausführungsform der Erfindung schlägt vor, die Stärke vor der Zumischung zu den anderen Einsatzstoffen zu verkleistern. Dies wirkt sich günstig auf die Verdickungswirkung auf. Ein weiterer, die Verdickungswirkung steigernder Effekt wird dadurch erzielt, daß die Verdickungswirkung durch intensives Rühren, Schereinwirkung, Verpumpungsprozesse oder Versprühungsprozesse gesteigert wird. Dies macht deutlich, daß das erfindungsgemäße verdickte Wasser ein ausgeprägtes rheopexes Verhalten aufweist, wie es sich durch Einwirkung von Schereinflüssen, wie z.B. Rühren mit einem elektrischen Rührstab (800 bis 1600 Umdrehungen pro Minute) oder beim Durchgang durch Kreiselpumpen bzw. beim Verspritzen durch Düsen momentan zeigt. Dabei erhöht sich die Verdickung, und es wird eine homogene und lange haltbare Verdickungswirkung erreicht.

Erfindungsgemäß wird bei dem vorstehend beschriebenen Verfahren als Komponente a) eine hochdisperse synthetische, bevorzugt pyrogene Kieselsäure eingesetzt. Als Additive eignen sich alle in der bereits erwähnten WO 92/13602 angeführten Additive. Hierzu zählen Fettalkohol oder Zuckeralkoholether, Ester mit Fettsäuren des Polyethylenglykols oder Polypropylenglykols, Polyethylenimin und Poly(N-vinyl-2-pyrrolidon) in dem in Anspruch 1 genannten Konzentrationen. Als Stärke (Komponente c) eignet sich insbesondere Maisstärke, andere Getreidestärken, Kartoffel- oder Tapiokastärke oder auch sog. modifizierte Stärke (Beispiel 2). Unter verzweigtkettigen Polysaccharide werden erfindungsgemäß Pflanzengummis, wie Guar, Johannisbrotkernmehl oder Xanthan verstanden. Ein Überblick über derartige Gummis findet sich in Ullmanns Enzyklopädie der Techn. Chemie, 4. Auflage "Galaktomannans".

Das vorstehend beschriebene Verfahren kann vorteilhaft in der Weise abgewandelt werden, daß entweder gefrierpunktserniedrigende Stoffe und/oder Konservierungsmittel zugesetzt werden. Als gefrierpunktserniedrigende Stoffe können eingesetzt werden Glycerin, Propylenglykol, Kaliumacetat oder Lactat oder Kochsalz bzw. Mischungen dieser Stoffe. Dadurch wird es nun möglich, ein verdicktes Wasser herzustellen, das selbst bei Temperaturen weit unter 0°C sein rheopexes Verhalten beibehält. Diese günstige Eigenschaft ist für viele Anwendungsfälle, wie z.B. als Löschmittel bei Temperaturen unter 0°C oder beim Einsatz von Kältekissen, ausnutzbar.

Der erfindungsgemäß vorgeschlagene Zusatz von Konservierungsmitteln, wie Sorbin-, Propion- oder Benzoesäure bzw. deren Derivate ist vorteilhaft, da dadurch der Stärkeanteil gegen mikrobiellen Abbau stabilisiert werden kann.

Die überraschende synergistische Wirkungssteigerung des verdickten Wassers ist für Feuerlöschmittel, Bohrflüssigkeiten, Füllmedien für Wasserbetten oder für Kühlbeute, oder für ReinigungsPflanzenschutz- oder Gerbmittel von Vorteil, bei gleichzeitiger Verdickungswirkung ein Erhalt der Fließfähigkeit, der Spritz- und Sprühbarkeit oder der hydrostatischen Eigenschaften des verdickten Wassers eintritt. Sie ist aber auch zur Herstellung von Bakteriennährböden, von Kleb- und Bindemitteln, Beschichtungen, Textilschlichtemitteln, in der Papierherstellung oder der Herstellung von Nahrungsmitteln von Nutzen.

Die technischen Vorteile werden durch die Bereithaltung von höherer Löschkraft durch den größeren Wasseranteil und seiner Haftung an kalten und heißen Oberflächen oder dessen größerer Aufnahmekapazität für suspendierbare Feststoffe (für Bohrspülmittel) oder in Wasser löslichen - z.B. frostschützende Zusätze, die bessere Handhabung durch Förderbarkeit, Spritz- und Sprühfähigkeit, und die wesentliche Reduktion des für den mikrobiellen Abbau noch vorhandenen Stärkeanteils erzielt.

Über die in der vorstehend erwähnten WO 92/13602 erwähnte Feuerlösch- bzw. brandhemmende Wirkung hinaus wird auch durch das vorliegend gefundene Mittel und Verfahren noch eine weitere Verbesserung durch bessere Haftung des Wassers in der Glutzone von Bränden fester Stoffe und die besser kontrollierbare Wasserverdampfung durch das Aufschäumen der Wasserschicht bei Flammeneinwirkung erzielt. Nach dem Verdampfen des Wassers verbleibt an der Oberfläche eine geschlossene kieselsäurehaltige Schicht, die wegen des hohen Gehalts der unbrennbaren Kieselsäure eine längere Isolierwirkung ausübt, als ein nur aus Stärke erzeugter Carbonisierungsschaum.

Die folgenden Beispiele erläutern die Erfindung:

### Beispiel 1

100 g Maisstärke werden durch Erhitzen mit 750 ml Wasser auf 90°C unter Umrühren verkleistert. Vom Kleisterbrei werden 100 g in eine Mischung von verdicktem Wasser, bestehend aus 800 ml Wasser, 17 g pyrogener Kieselsäure, und 0,4 g des Additivs Polyethylenimin (Auslaufzeit 16 sec. im Auslaufbecher nach DIN 53211) gegeben und umgerührt. Die Auslaufzeit des so erhaltenen Gemisches beträgt nun 27 sec. Anstelle des Additivs Polyethlyenimin kann auch Polyethylenglykol der Molmasse von ca. 1220, PEG-120 Jojobasäure und PEG-120 Jojobaalkohol (hydrolisiertes, ethoxyliertes Jojobaöl, Molmasse ca. 5600), Polyoxyethylenlaurylether, Molmasse ca. 380, Polyoxyethylensorbitanmonostearat, Molmasse ca. 1200 oder Poly(N-vinyl-2-pyrrolidon) eingesetzt werden.

Die erhaltenen Gemische lassen sich aus einer Pumpsprühflasche leicht verspritzen und haften an festen Oberflächen, ohne daß nennenswerte Mengen ablaufen. Sie eignen sich gut als Feuerlöschmittel mit anhaftender Wirkung für brennbare feste Stoffe, wobei der Stärkezusatz wegen seiner geringen Anteilsmenge selbst keine nennenswerte Brandlast darstellt, und beim Beflammen einen feinblasigen Schaum mit zusätzlicher Isolier- und Löschwirkung erzeugt.

Als Bohrspülflüssigkeit bietet das so hergestellte verdickte Wasser die Vorteile guter Pump- und Förderbarkeit, hervorragendem Tragevermögen für Bohrabrieb und Stabilität gegenüber scherender Beanspruchung besonders bei höheren Temperaturen.

Durch Zusatz von gefrierpunkterniedrigenden Stoffen wie Glycerin, Propylenglykol, Kaliumlactat oder -acetat ist eine Anwendung des so verdickten Wassers z.B. als Löschmittel bei Temperaturen unter O°C möglich.

Es lassen darin auch Wirksubstanzen von Pflanzenschutzmitteln oder Reinigungsmitteln zur materialsparenden, verlustarmen Aufbringung suspendieren oder auflösen. Zur Stabilisierung des Stärkeanteils wegen mikrobiellen Abbau werden soweit erforderlich Konservierungsmittel, wie Sorbin-, Propion- oder Benzoesäure bzw. ihre Derivate eingesetzt.

### Beispiel 2

15 g modifizierte Stärke (Wachsmaisstärke, mit 1,5 - 2,1 % Acetylgruppen, Roquette CLEARAM (R) CH 30) werden mit 1 l Wasser von 90°C versetzt, und von einem Teil dieser Mischung nach Erkalten der Viskosität im Auslaufbecher bei 25°C im Auslaufbecher zu 10 sec. bestimmt. Zur Mischung werden nun 15 g an pyrogener Kieselsäure gegeben, und mit einem elektrischen Rührquirl (ca. 800 U/min. Messer 4 cm Durchmesser) verrührt. Die Auslaufviskosität beträgt danach 11 sec. Nach Zugabe von 1 g an Polyoxyethylenlaurylether und kurzem Rühren steigt die Viskosität auf 22 sec. an und bleibt auch bei andauerndem Rühren mit einem Schermesser (Querschnitt 4 cm; 800 U/min.) bei diesem Wert. Das Gemisch ist pump- und sprühbar und zeigt eine vorzügliche Haftung an Oberflächen. Auch auf einem vertikal aufgestellten erhitzten Aluminiumblech wird gute Haftung festgestellt. Beim nur kurzen Beflammen dieser Schichten tritt Aufschäumen ein. Im Kleinlöschversuch an Fichtenlatten wird im Laborversuch sehr gute Flammenlöschung und ein Unterbinden des Wiederaufflammens erzielt.

### Beispiel 3

150 g pyrogene Kieselsäure, 150 g Maisstärke, 10 g Xanthan und 10 g Sorbinsäure werden trocken miteinander vermischt und dieses Gemisch sodann mit 9670 ml Wasser von 85°C verrührt. Diese wasserdünne Dispersion wird nach einigem Stehen mit 20 g Polyoxyethylenlaurylether (ca. 3 Ethoxylgruppen) versetzt und mit einem elektrischen Rührquirl (ca. 800 U/min) gerührt, worauf sofort Verdickung wie in Beispiel 2 eintritt. 6 Liter des so verdickten Wassers werden in einen handelsüblichen 6 l-Wasserlöscher nach EN gefüllt und dieser mit Preßluft auf 15 bar abgedrückt.

Das Löschmittel läßt sich aus diesem Löscher leicht verspritzen oder mit einer entsprechenden Düse auch versprühen. Eine Reduktion der Verdickung tritt hierbei nicht ein, und es wird eine Bildung von gut anhaftenden Schichten des verdickten Wassers an Oberflächen festgestellt. Bei einem Löschangriff auf 3 übereinander gestapelten im Vollbrand befindliche Holzpaletten konnte hieraus mit nur geringem Löschmittelaufwand eine sofortige flammenlöschende Wirkung, Vermeidung von Rückzündungen und wirksame Eindämmung und Unterdrückung der Brandglut erreicht werden.

Überraschenderweise wurde das Mittel neben seiner guten Wirkung auf glutbildende brennbare Stoffe auch bei der Bekämpfung eines Benzinbrandes als wirksam gefunden, wobei sowohl bei Anwendung des Spritz- als auch des Sprühverfahrens eine abdeckende Wirkung auf die brennende Benzinfläche zu beobachten war.

### Beispiel 4

Ein gemäß Beispielen 1 oder 2 hergestelltes verdicktes Wasser mit 20 % Sorbitsirup und 10 % Kochsalz versetzt, in Folienbeutel verschweißt und auf -18°C abgekühlt. Die Beutel bleiben auch bei dieser Temperatur noch biegsam. Sie geben die enthaltene Kälte langsam ab und sind nach dem Auftauen für beliebig wiederholbare Kühl- und Auftauzyklen einsetzbar.

### Beispiel 5

Ein gemäß den Beispielen 1 oder 2 hergestelltes verdicktes Wasser wird mit 10 % Gerbsäure versetzt. Mit der hergestellten Mischung werden von Fleisch- und Fettresten gereinigte Schweinehäute bestrichen. Das verdickte Wasser haftet vollständig an der Oberfläche der Häute. Sie werden 48 Stunden bei 35°C gelagert. Die in die Häute eingezogene Gerbsäure wird somit ohne Verluste zur Gerbung der Häute verbraucht.

### Beispiel 6

Ein verdicktes Wasser gemäß Beispielen 1 oder 2 wird mit Schleifabrieb von Gestein versetzt und dabei festgestellt, daß das spezifisch erheblich schwerere Gesteinsmehl im kalten und heißen Zustand homogen in der Schwebe bleibt, ohne im verdickten Wasser zu sedimentieren. Bei Schereinwirkung wird nur ein geringfügiger Viskositätsabfall und kein Sedimentieren festgestellt.

## Patentansprüche

1. Verfahren zur Herstellung von verdicktem Wasser aus Wasser, Kieselsäure und Additiven, ausgewählt aus Fettsäureester oder Ethern von Fettalkoholen und Zuckeralkoholen des Polyethylenglykols oder Polypropylenglykols oder Polyethylenimin oder Polyvinylpyrrolidon, **dadurch gekennzeichnet,** daß
a) 0,1 bis 2 Gew.-% Kieselsäure
b) 0,001 bis 0,5 Gew.-% Additiv
c) 0,5 bis 5 Gew.-% Stärke und/oder verzweigtkettiges Polysaccharid und
d) zu 100 Gew.-% ergänzte Anteile an Wasser
vermischt werden.

2. Verfahren nach Anspruch 1, dadurch gekennzeichnet, daß das verzweigtkettige Polysaccharid Guar und/oder Johannisbrotkernmehl und/oder Xanthan ist.

3. Verfahren nach Anspruch 1 oder 2, dadurch gekennzeichnet, daß gefrierpunkterniedrigende Stoffe zugesetzt werden.

4. Verfahren nach Anspruch 3, dadurch gekennzeichnet, daß die gefrierpunktserniedrigenden Stoffe ausgewählt sind aus Glycerin, Propylenglykol, Kaliumacetat, Kaliumlactat oder Kochsalz oder deren Mischungen.

5. Verfahren nach mindestens einem der vorstehenden Ansprüche 1 bis 4, dadurch gekennzeichnet, daß Konservierungsmittel zugesetzt werden.

6. Verfahren nach Anspruch 5, dadurch gekennzeichnet, daß die Konservierungsmittel ausgewählt sind aus der Gruppe Sorbin-, Propyon-, oder Benzoesäure bzw. deren Derivate und/oder deren Mischungen.

7. Verfahren nach mindestens einem der Ansprüche 1 bis 6, dadurch gekennzeichnet, daß die Mischung der Einzelkomponenten a) bis d) gegebenenfalls des Konservierungsmittels, gegebenenfalls des gefrierpunktserniedrigenden Stoffes in beliebiger Reihenfolge erfolgt.

8. Verfahren nach mindestens einem der Ansprüche 1 bis 7, dadurch gekennzeichnet, daß die Stärke vor der Vermischung mit den anderen Komponenten verkleistert wird.

9. Verfahren nach mindestens einem der Ansprüche 1 bis 8, dadurch gekennzeichnet, daß eine Verstärkung der Verdickungswirkung durch intensives Rühren oder Schereinwirkung oder Verpumpungsprozesse oder durch Versprühungsprozesse herbeigeführt wird.

10. Verdicktes Wasser, dadurch gekennzeichnet, daß es nach einem der Verfahren 1 bis 9 erhalten worden ist.

11. Verwendung des verdickten Wassers nach Anspruch 10 als Feuerlösch- oder Brandschutzmittel.

12. Verwendung des verdickten Wassers nach Anspruch 10, dadurch gekennzeichnet, daß dies als Trägersubstanz für Farbpigmente, Reinigungsmittel, Pflanzenschutzmittel oder Borspülflüssigkeiten, Inhalt von Kühlkompressen oder Ultraschallkontaktgel eingesetzt wird.

13. Verwendung des verdickten Wassers nach Anspruch 10, dadurch gekennzeichnet, daß das verdickte Wasser als Übertragungsmedium für in undichtem Wasser lösliche Substanzen Gerbsäure oder Entkalkungssubstanzen verwendet wird in der Weise, daß die zu übertragende Substanz in dem verdickten Wasser gelöst wird und die so hergestellte Mischung auf das zu übertragende Medium wie z.B. Leder oder die verkalkte Fläche aufgebracht wird.

14. Verwendung des verdickten Wassers nach Anspruch 10, dadurch gekennzeichnet, daß es als Lösemittel für mit Wasser löslichen Klebern auf festen Untergründen befestigten Substraten eingesetzt wird in der Weise, daß das verdickte Wasser auf das Substrat aufgebracht wird.

## Claims

1. Process for preparing thickened water from water, silica and additives selected from the group consisting of fatty acid esters, fatty alcohol ethers and sugar alcohol ethers of polyethylene glycol or polypropylene glycol or polyethyleneimine or polyvinylpyrrolidone, characterized in that
a) from 0.1 to 2% by weight of silica,
b) from 0.001 to 0.5% by weight of additive,
c) from 0.5 to 5% by weight of starch and/or branched polysaccharide and
d) water to 100% by weight are mixed.

2. Process according to Claim 1, characterized in that the branched polysaccharide is guar and/or carob meal and/or xanthan.

3. Process according to Claim 1 or 2, characterized in that substances which lower the freezing point are added.

4. Process according to Claim 3, characterized in that the substances which lower the freezing point are selected from the group consisting of glycerol, propylene glycol, potassium acetate, potassium lactate and sodium chloride and mixtures thereof.

5. Process according to at least one of the preceding Claims 1 to 4, characterized in that preservatives are added.

6. Process according to claim 5, characterized in that the preservatives are selected from the group consisting of sorbic acid, propionic acid and benzoic acid and their derivatives and mixtures thereof.

7. Process according to at least one of Claims 1 to 6, characterized in that the individual components a) to d), the preservative if used and the substance which lowers the freezing point if used, are mixed in any order.

8. Process according to at least one of Claims 1 to 7, characterized in that the starch is gelatinized prior to mixing with the other components.

9. Process according to at least one of Claims 1 to 8, characterized in that the thickening action is intensified by intensive stirring or action of shear or pumping processes or by spraying processes.

10. Thickened water characterized in that it has been obtained by one of the processes 1 to 9.

11. Use of the thickened water according to Claim 10 as fire extinguishing medium or fire protection medium.

12. Use of the thickened water according to Claim 10, characterized in that it is used as carrier substance for pigments, cleaning agents, crop protection agents or drilling fluids, as contents of cooling compresses or as ultrasound contact gel.

13. Use of the thickened water according to Claim 10, characterized in that the thickened water is used as transfer medium for substances soluble in undensified water, tannic acid or limescale removers by dissolving the substance to be transferred in the thickened water and applying the mixture prepared in this way to the medium to be transferred, e.g. leather or the surface on which limescale is deposited.

14. Use of the thickened water according to Claim 10, characterized in that it is used as stripping agent for materials which have been fixed to solid substrates by means of water-soluble adhesives by applying the thickened water to the material.

## Revendications

1. Procédé de fabrication d'eau épaissie consistant en eau, acide silicique et additifs choisis parmi les esters d'acides gras ou les éthers d'alcools gras et d 'alcools sucres de polyéthylèneglycol ou de polypropylène glycol ou la polyéthylène mine ou la polyvinylpyrrolidone, caractérisé en ce que l'on mélange :
a) de 0,2 à 2 % en poids d'acide silicique;
b) de 0,001 à 0,5 % en poids d'additif;
c) de 0,5 à 5 % en poids d'amidon et/ou d'un polysaccharide ramifié; et
d) de l'eau jusqu'à 100 % en poids de l'ensemble des constituants.

2. Procédé selon la revendication 1, caractérisé en ce que le polysaccharide ramifié est de la gomme guar et/ou de la farine de graine de caroube et/ou de la gomme xanthane.

3. Procédé selon la revendication 1 ou 2, caractérisé en ce que l'on ajoute des substances abaissant le point de congélation.

4. Procédé selon la revendication 3, caractérisé en ce que les substances abaissant le point de congélation sont choisies parmi le glycérol, le propylèneglycol, l'acétate de calcium, le lactate de calcium ou le chlorure de sodium ou leurs mélanges.

5. Procédé selon au moins l'une des revendications 1 à 4, caractérisé en ce que l'on ajoute un agent de conservation.

6. Procédé selon la revendication 5, caractérisé en ce que l'agent de conservation est choisi parmi le groupe consistant en les acides sorbique, propionique ou benzoïque, ou leurs dérivés et/ou leurs mélanges.

7. Procédé selon au moins l'une des revendications 1 à 6, caractérisé en ce que l'on ajoute de préférence les composants individuels éventuellement l'agent de conservation, et éventuellement les substances abaissant le point de congélation dans cet ordre.

8. Procédé selon au moins l'une des revendications 1 à 7, caractérisé en ce que l'amidon est empâté avant mélange avec les autres composants.

9. Procédé selon au moins l'une des revendications 1 à 8, caractérisé en ce que l'on réalise un renforcement de l'effet d'épaississement par mélange intensif ou cisaillement ou par des procédés de pompage ou par des procédés d'atomisation.

10. Eau épaissie caractérisée en ce qu'elle est obtenue par un procédé selon les revendications 1 à 9.

11. Utilisation d'eau épaisse selon la revendication 10, comme agent d'extinction de feu ou de protection contre le feu.

12. Utilisation de l'eau épaisse selon la revendication 10, caractérisée en ce que celle-ci est mise en oeuvre en tant que substance support pour des pigments colorés, des produits de nettoyage, des agents phytosanitaires ou des liquides de forage, en tant que contenu de compresses rafraîchissantes ou gel de contact pour ultrasons.

13. Utilisation de l'eau épaisse selon la revendication 10 caractérisée en ce que l'eau épaissie est utilisée en tant que milieu de transfert pour des acides tanniques ou des substances détartrantes solubles dans l'eau non densifée, l'utilisation étant de telle sorte que la substance à transférer est dissoute dans l'eau épaissie et en ce que le mélange ainsi préparé est appliqué sur le milieu sur lequel on désire réaliser le transfert par exemple le cuir ou une surface entartrée.

14. Utilisation de l'eau épaisse selon la revendication 10, caractérisée en ce qu'elle peut être utilisée en tant que solvant pour des substrats fixés sur des supports solides par des colles solubles à l'eau l'utilisation étant de telle sorte que l'eau épaissie est appliquée sur le substrat.
